# EUROPEAN PATENT SPECIFICATION

(11) **EP 2 579 525 B1**
(45) Date of publication and mention of the grant of the patent: **09.11.2022**
(21) Application number: 11785992.6
(22) Date of filing: 08.03.2011
(51) Int. Cl.: H04L 65/10

(54) **SYSTEM AND METHOD FOR MANAGING DEVICE IDENTIFIERS OF UBIQUITOUS NETWORK**
SYSTEM UND VERFAHREN ZUR VERWALTUNG VON GERÄTEIDENTIFIKATOREN EINES UBIQUITÄREN NETZWERKS
SYSTÈME ET PROCÉDÉ POUR LA GESTION D'IDENTIFICATEURS DE DISPOSITIF D'UN RÉSEAU OMNIPRÉSENT

(30) Priority: 28.05.2010 CN 201010188489
(43) Date of publication of application: 10.04.2013
(73) Proprietor: ZTE Corporation, Shenzhen, Guangdong 518057 (CN)
(72) Inventor: LI, Hui, Shenzhen Guangdong 518057 (CN); LI, Yu, Shenzhen Guangdong 518057 (CN); JIA, Jue, Shenzhen Guangdong 518057 (CN); ZHAO, Changjun, Shenzhen Guangdong 518057 (CN)
(74) Representative: Lavoix
(86) International application number: PCT/CN2011/071619
(87) International publication number: WO 2011/147220

(56) References cited:
- WO-A1-2008/096906
- CN-A- 1 968 184
- CN-A- 101 009 692
- CN-A- 101 599 952
- KR-A- 20080 072 780
- US-A1- 2008 056 261
- US-A1- 2009 141 741
- US-B2- 7 339 895
- SAKANE S ET AL: "A translation method between 802.15.4 and IPv6 nodes", INTERNET CITATION, 27 January 2006 (2006-01-27), XP002456480, Retrieved from the Internet: URL:http://www.taca.jp/docs/saint2006/sain t06-ws.pdf [retrieved on 2007-10-25]
- ARFAH A HASBOLLAH ET AL: "Performance analysis for 6loWPAN IEEE 802.15.4 with IPv6 network", TENCON 2009 - 2009 IEEE REGION 10 CONFERENCE, IEEE, PISCATAWAY, NJ, USA, 23 January 2009 (2009-01-23), pages 1-5, XP031617635, ISBN: 978-1-4244-4546-2

## Description

### Field of the Invention

The present invention relates to the communication field, and more particularly to a system and a method for managing a device identifier of the ubiquitous network.

### Background of the Invention

As telecommunication operators continuously expand their profit field, traditional telecommunication operators have extended the profit field from the telecommunication field to the Internet field. Recently, with the rise of the ubiquitous network, operators have entered the new technology field represented by the ubiquitous network.

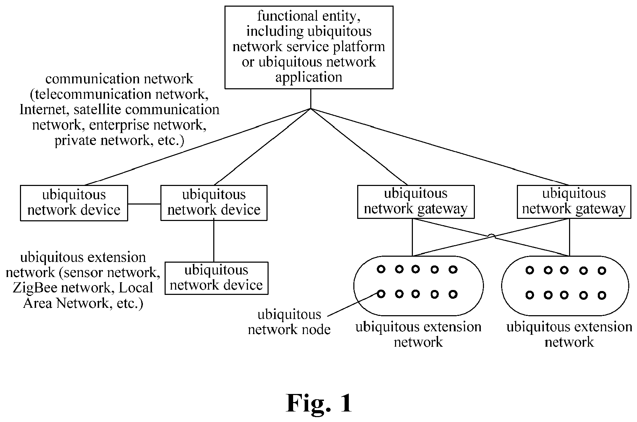

The ubiquitous network not only includes the traditional mobile communication network, telecommunication network, fixed communication network, Internet and other communication networks, but also involves the non-traditional communication networks operated by telecommunication operators. The ubiquitous network includes networks with enormous difference in network feature, such as sensor network, personal area network or other IP and non-IP networks, and even includes satellite communication network, private network, enterprise network, etc. The hierarchy of the ubiquitous network is shown in Fig. 1. The ubiquitous extension network, such as sensor network and ZigBee network, requires to access the communication network through the ubiquitous network gateway. The ubiquitous network involves a large quantity of ubiquitous network devices, including traditional communication equipments, ubiquitous network gateways, sensor network devices, the network devices of the ubiquitous network which include IP or non-IP networks, and ubiquitous network nodes which include sensor, actuator, and sensor node. The ubiquitous network devices above require different identifiers to identify uniqueness of the network device, thus producing a variety of complicated identifiers in the ubiquitous network. Generally, the identifiers can be divided into two categories: the identifier in the first category, referred to as device identifier, is assigned to the device by the network, such as IP address, Uniform Resource Identifier (URI), Uniform Resource Name (URN), Uniform Resource Locator (URL), Fully Qualified Domain Name (FQDN), etc.; the identifier in the second category, referred to as unique identification code, is assigned by operators or preset by manufacturers when leaving the factory, including Mobile Subscriber International ISDN Number (MSISDN), physical address (MAC), machine code, etc. The unique identification code is fixed.

At present, in the ubiquitous network services, the ubiquitous network service platform on the communication network side can only conduct the operation and service interaction with the network (can be referred to as level-one network) in which the ubiquitous network gateway and the ubiquitous network device directly connected with the ubiquitous network service platform are located. The ubiquitous network gateway and the ubiquitous network devices in the level-one network can be connected with one or more ubiquitous network devices or ubiquitous network gateways. The network in which the ubiquitous network devices or the ubiquitous network gateways connected with the level-one network are located can be referred to as the extension network of the ubiquitous network, namely the level-two network. The level-two network includes: Sensor Network, Wireless Personal Area Network, Converged Personal Network Service, Machine to Machine (M2M) Area Network, Home Network and ZigBee Network, namely the pronoun of the Institute of Electrical and Electronics Engineers (IEEE) 802.15.4 protocol, and other ubiquitous extension networks, stub network, etc.

At present, numerous types of the ubiquitous networks and the devices result in various identifiers in the ubiquitous network. Thus, it is difficult for the ubiquitous network service platform on the communication network side to manage various identifiers. The ubiquitous network service platform can only identify the identifiers in the level-one network, which makes it difficult to conduct the ubiquitous network service.

US 7339895 B2, US 2008/056261 A1 and US 2009/141741 A1 provide related technical solutions, however, the above mentioned problem still remains unsolved.

### Summary of the Invention

In view of this, the present invention mainly provides a system and a method for managing device identifier of the ubiquitous network, so as to realize the service interaction between the ubiquitous network service platform and the ubiquitous network devices in the level-two network.

Thus, the technical solution of the present invention is realized as follows. The present invention provides a ubiquitous network gateway according to claim 1.

In the solution above, the ubiquitous network gateway further comprises: a service transceiver unit, configured to interact with a ubiquitous network service platform according to the converted identifier of the communication network device.

The present invention also provides a system for managing device identifiers of the ubiquitous network according to claim 2.

In the solution above: an identifier management unit is configured to maintain or store the mapping relationship of the identifiers.

In the solution above, the ubiquitous network service platform is configured to maintain or store the mapping relationship of the identifiers.

In the solution above, the identifier management unit is configured to manage the mapping relationship of the identifiers, including one or more functions of: adding, updating and inquiring.

In the solution above, the ubiquitous network service platform is configured to perform service interaction with the identifier management unit, including one or more functions of: adding, updating and inquiring; and the identifier management unit is configured to provide one or more functions of: adding, updating and inquiring.

In the solution above, the identifier management unit is configured to receive updating information sent by the ubiquitous network service platform and update the mapping relationship of the identifiers stored in the identifier management unit; and correspondingly, the ubiquitous network service platform is configured to send the updating information including the mapping relationship of the identifiers to the identifier management unit.

In the solution above, the ubiquitous network service platform is configured to send inquiring information to the identifier management unit, wherein the inquiring information includes the identifier of the ubiquitous network gateway or the identifier of the device of the extension network of the ubiquitous network; the identifier management unit is configured to receive the inquiring information, search the mapping relationship of the identifiers according to the identifier of the ubiquitous network gateway or the identifier of the device of the extension network of the ubiquitous network in the inquiring information, and transmit obtained identifier information of the communication network device to the ubiquitous network service platform; and/or the identifier management unit is configured to receive the inquiring information sent by a network management, wherein the inquiring information includes the identifier of the communication network device, search the mapping relationship of the identifiers, and send an obtained identifier of the device of the extension network of the ubiquitous network or an obtained identifier of the ubiquitous network gateway to the network management.

In the solution above, the ubiquitous network service platform is configured to send information of adding mapping relationship of the identifiers to the identifier management unit; and the identifier management unit is configured to receive the information of adding mapping relationship of the identifiers and add the mapping relationship of the identifiers in the information into local information.

The present invention also provides a method for a ubiquitous network gateway for managing device identifier of the ubiquitous network according to claim 9.

In the solution above, the ubiquitous network service platform performs service interaction with an identifier management unit, including adding, updating and inquiring the mapping relationship of the identifiers.

In the solution above, the ubiquitous network service platform or the identifier management unit is configured to maintain or store the mapping relationship of the identifiers.

In the solution above, the inquiring comprises: the ubiquitous network service platform sending inquiring information to the identifier management unit to inquire the identifier of the communication network device, wherein the inquiring information includes the identifier of the ubiquitous network gateway or the identifier of the device of the extension network of the ubiquitous network, and the identifier management unit receiving the inquiring information and transmitting the identifier of the communication network device to the ubiquitous network service platform according to the mapping relationship of the identifiers; and/or, a network management sending the inquiring information to the identifier management unit, wherein the inquiring information includes the identifier of the device of the extension network of the ubiquitous network or the identifier of the ubiquitous network gateway, and the identifier management unit receiving the inquiring information and transmitting the identifier of the device of the extension network of the ubiquitous network or the identifier of the ubiquitous network gateway to the network management according to the mapping relationship of the identifiers; the updating comprises: the ubiquitous network service platform sending updating information including the mapping relationship of the identifiers to the identifier management unit, and the identifier management unit receiving the updating information and updating the locally stored mapping relationship of the identifiers according to the mapping relationship of the identifiers in the updating information; and the adding comprises: the ubiquitous network service platform sending information of adding mapping relationship of the identifiers to the identifier management unit, and the identifier management unit receiving the information and adding the mapping relationship of the identifiers in the information into the local information.

It can be concluded from the above that by the system and method of managing device identifier of the ubiquitous network of the present invention, the identifier of the device of the extension network of the ubiquitous network in the level-two network are, through the ubiquitous network gateway, converted to the identifier of the communication network device that can be identified by the communication network. The ubiquitous network service platform realizes the service interaction with the ubiquitous network device according to the converted identifier of the communication network device. Thus, the present invention is beneficial for conducting services of the ubiquitous network.

### Brief Description of the Drawings

Fig. 1 is a schematic diagram of the structure of the ubiquitous network;
Fig.2 is a schematic diagram of the formation of the system for managing the identifier of the device of the extension network of the ubiquitous network according to the embodiment of the present invention;
Fig.3 is a schematic diagram of the flow of the method for managing the identifier of the device of the extension network of the ubiquitous network according to the embodiment of the present invention.

### Detailed Description of the Embodiments

The basic concept of the present invention is that: the ubiquitous network gateway converts the identifier of the device of the extension network of the ubiquitous network to the identifier of the communication network device, the ubiquitous network service platform performs service interaction with the ubiquitous network gateway according to the identifier of the communication network device, and further performs service interaction with the device of the extension network of the ubiquitous network.

The device of the extension network of the ubiquitous network includes: sensor device, sensor node device, actuator, ZigBee device, etc. The ubiquitous extension network comprising these devices accesses the communication network through the ubiquitous network gateway device. The identifier of the communication network device refers to the identifier that meets the identifier specifications of the communication network, and can be identified in the communication network, or can be used by the network elements of the communication network. The network elements of the communication network can send services to the corresponding ubiquitous network gateway according to the identifier of the communication network device, and the ubiquitous network gateway relays the corresponding service to the corresponding device. For example, the identifier of the communication network device can be the identifier that ubiquitous network service platform requires to identify the device in the ubiquitous extension network. The identifier of the device of the extension network of the ubiquitous network is carried by the device of the extension network of the ubiquitous network. It can be preset by the manufacturer, or can be configured by the ubiquitous extension network or automatically configured by the extension network of the ubiquitous network. It is used within the ubiquitous extension network. The conversion process is substantially the process of assigning an identifier of the communication network device for the device of the extension network of the ubiquitous network.

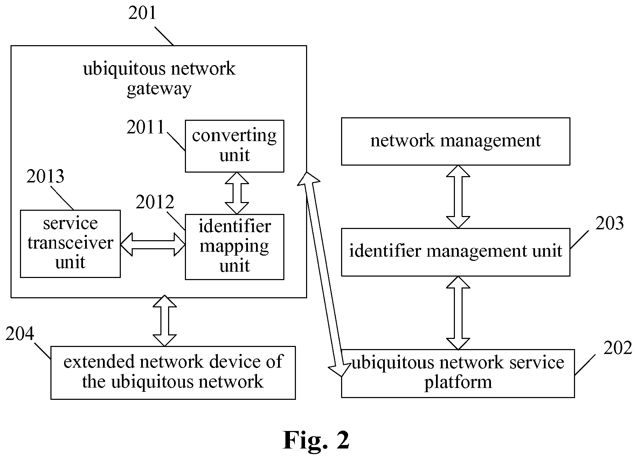

The present invention will be further described hereinafter in conjunction with the embodiment of the present invention. As shown in Fig.2:
a system for managing device identifier of the ubiquitous network comprises a ubiquitous network gateway 201 and a ubiquitous network service platform 202,
wherein the ubiquitous network gateway 201 is configured to convert to the identifier of the communication network device the identifier of the device of the extension network of the ubiquitous network 204 accessing the ubiquitous network, maintain or store the mapping relationship between the identifier of the device of the extension network of the ubiquitous network and the converted identifier of the communication network device, and perform service information interaction with the ubiquitous network service platform 202, wherein the mapping relationship is the correspondence relationship between the identifier of the device of the extension network of the ubiquitous network and the converted identifier of the communication network device, and the maintaining refers to the adding or deleting of the mapping relationship between the identifier of the device of the extension network of the ubiquitous network and the identifier of the communication network device; the service information includes the identifier of the communication network device, used for converting the identifier of the communication network device to the identifier of the device of the extension network of the ubiquitous network; and converting the identifier of the communication network device to the identifier of the device of the extension network of the ubiquitous network comprises: inquiring the mapping relationship between the identifier of the device of the extension network of the ubiquitous network and the identifier of the communication network device stored locally according to the identifier of the communication network device, and determining the identifier of the device of the extension network of the ubiquitous network corresponding to the identifier of the communication network device.

The ubiquitous network service platform 202 is configured to perform service interaction with the ubiquitous network gateway 201 according to the identifier of the communication network device, and further perform service interaction with the device of the extension network of the ubiquitous network 204.

In the above, the ubiquitous network gateway 201 specifically comprises:
a conversion unit 2011, configured to convert to the identifier of the communication network device the identifier of the device of the extension network of the ubiquitous network accessing the ubiquitous network, and store it in the identifier mapping unit 2012; and convert the identifier of the communication network device to the identifier of the device of the extension network of the ubiquitous network;
an identifier mapping unit 2012, configured to maintain or store the mapping relationship between the identifier of the device of the extension network of the ubiquitous network and the identifier of the communication network device; and
a service transceiver unit 2013, configured to perform service interaction with the ubiquitous network service platform 202 according to the identifier of the communication network device.

The ubiquitous network gateway 201 is specifically configured to receive the request information sent by the device of the extension network of the ubiquitous network 204 when accessing the ubiquitous network, combine the identifier of the ubiquitous network gateway with the identifier of the device of the extension network of the ubiquitous network 204, wherein the combination can be the mixing combination or the direct-connection combination; or combine the identifier of the ubiquitous network gateway and the identifier of the device of the extension network of the ubiquitous network 204 into an identifier group; or reassign an identifier for the device of the extension network of the ubiquitous network 204, correlate it with the identifier of the ubiquitous network gateway and send the information of device of the extension network of the ubiquitous network 204 to the ubiquitous network service platform 202, wherein the information includes the converted identifier of the communication network device; or receive the information of leaving the ubiquitous network sent by the device of the extension network of the ubiquitous network 204, inquire the mapping relationship between the identifier of the device of the extension network of the ubiquitous network and the identifier of the communication network device stored locally, delete the mapping relationship between the identifier of the device of the extension network of the ubiquitous network and the identifier of the communication network device corresponding to the identifier of the device of the extension network of the ubiquitous network, and send to the ubiquitous network service platform 202 the information that the device of the extension network of the ubiquitous network 204 leaves the network;
correspondingly, the device of the extension network of the ubiquitous network 204 is configured to send the request information to the ubiquitous network gateway 201 when accessing the ubiquitous network, wherein the request information includes the identifier of the device of the extension network of the ubiquitous network, and notify the ubiquitous network gateway 201 that the device of the extension network of the ubiquitous network is accessing the network, so that the ubiquitous network gateway 201 converts the identifier of the device of the extension network of the ubiquitous network, so as to perform service interaction with the ubiquitous network service platform 202; or send the information of leaving the ubiquitous network, to the ubiquitous network gateway 201 when leaving the ubiquitous network, wherein the information of leaving the network includes the identifier of the device of the extension network of the ubiquitous network.

The system further comprises:
an identifier management unit 203, configured to receive the information of adding the mapping relationship between the identifier of the communication network device and the identifier of the ubiquitous network gateway, namely the mapping relationship of the identifiers, sent by the ubiquitous network service platform 202, add the mapping relationship between the identifier of the communication network device and the identifier of the ubiquitous network gateway into the local information; or receive the updating information sent by the ubiquitous network service platform 202 and update the local mapping relationship of the identifiers, wherein the updating refers to deleting the mapping relationship of the identifiers corresponding to the received mapping relationship of the identifiers; and
a ubiquitous network service platform 202, configured to receive the information of the device of the extension network of the ubiquitous network 204 sent by the ubiquitous network gateway 201, and send to the identifier management unit 203 the information of adding the mapping relationship of the identifiers; or receive the information of the device of the extension network of the ubiquitous network 204 leaving the network sent by the ubiquitous network gateway 201, and send the updating information to the identifier management unit 203, wherein the updating information includes the mapping relationship of the identifiers.

The ubiquitous network service platform 202 is configured to send the inquiring information to the identifier management unit 203, send service message to the ubiquitous network gateway 201 according to the obtained identifier of the communication network device, and further perform service interaction with the device of the extension network of the ubiquitous network 204, wherein the inquiring information includes the identifier of the ubiquitous network gateway; and
the identifier management unit 203 is configured to receive the inquiring information, inquire the mapping relationship of the identifiers according to the identifier of the ubiquitous network gateway in the inquiring information, send the identifier of the communication network device corresponding to the identifier of the ubiquitous network gateway in the mapping relationship of the identifiers and the device identifier information thereof to the ubiquitous network service platform 202, wherein the device identifier information includes the identifier of the communication network device and the storage duration of the identifier of the communication network device.

The ubiquitous network service platform 202 is further configured to confirm that the mapping relationship between the identifier of the communication network device and the identifier of the ubiquitous network gateway requires to be updated. Specifically, the ubiquitous network service platform is configured to: compare the storage duration in the received device identifier information and the duration preset by itself; and if it is determined that the storage duration in the received device identifier information is greater than the preset duration, it indicates that the mapping relationship between the identifier of the communication network device and the identifier of the ubiquitous network gateway in the identifier management unit 203 has existed for a long time and needs to be updated, send the information of requesting the identifier of the communication network device to the ubiquitous network gateway 201 and receive the identifier of the communication network device returned by the ubiquitous network gateway 201, and send the updating information to the identifier management unit 203, wherein the updating information includes the identifier of the communication network device returned by the ubiquitous network gateway 201 and the corresponding identifier of the ubiquitous network gateway, namely the mapping relationship of the identifiers; the preset duration can be set according to actual needs;
the ubiquitous network gateway 201 is configured to receive request information, convert all the identifiers of the connected devices of the extension network of the ubiquitous network and send the converted identifiers of the communication network device to the ubiquitous network service platform 202; and
the identifier management unit 203 is configured to receive the updating information, compare the received mapping relationship of the identifiers with mapping relationship of the identifiers of itself; and if any difference therebetween, update mapping relationship of the identifiers of itself, wherein the updating includes: deleting what is redundant, adding what it lacks and modifying what is different in the mapping relationship of the identifiers.

In the system above, the functions of the ubiquitous network service platform 202 can also be realized through the ubiquitous network application. The ubiquitous network service platform 202 and the identifier management unit 203 can be realized separately, or the identifier management unit 203 can be realized through a ubiquitous network service platform 202 by placing the identifier management unit 203 in the ubiquitous network service platform 202.

Furthermore, the identifier management unit 203 can be further configured to maintain or store the mapping relationships among any two or three of the identifier of the device of the extension network of the ubiquitous network, the identifier of the ubiquitous network gateway and the identifier of the communication network device, or maintain or store the mapping relationship between the identifier of the device of the extension network of the ubiquitous network and the identifier of the communication network device. That is to say, the mapping relationship of the identifiers can further include the mapping relationship of the identifier of the device of the extension network of the ubiquitous network, the identifier of the ubiquitous network gateway and the identifier of the communication network device, or the identifier management unit 203 maintains or stores the mapping relationship between the identifier of the device of the extension network of the ubiquitous network and the identifier of the communication network device.

Correspondingly, the ubiquitous network gateway 201 is further configured to send service information to the ubiquitous network service platform 202 or the ubiquitous network application 202, wherein the service information includes the identifier of the communication network device, the corresponding identifier of the ubiquitous network gateway and the identifier of the device of the extension network of the ubiquitous network, or includes the identifier of the device of the extension network of the ubiquitous network and the identifier of the communication network device.

The ubiquitous network service platform 202 or the ubiquitous network application 202 is further configured to send a mapping relationship of the identifiers to the identifier management unit 203 and send the inquiring information to the identifier management unit 203, wherein the inquiring information includes the identifier of the device of the extension network of the ubiquitous network.

A network management is configured to inquire the mapping relationship of the identifiers in the identifier management unit 203 according to the identifier of the communication network device, obtain the identifier of the ubiquitous network gateway or the identifier of the device of the extension network of the ubiquitous network, so as to realize the positioning of the ubiquitous network gateway or the device of the extension network of the ubiquitous network.

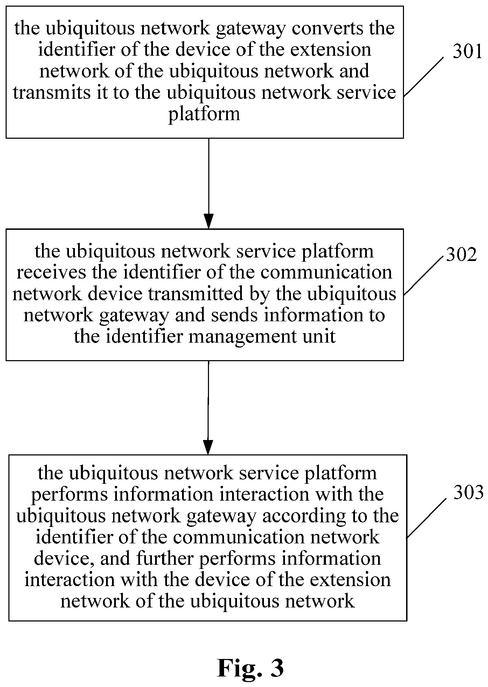

The embodiment of the present invention also provides a method for managing the device identifier of the ubiquitous network. As shown in Fig. 3, the method comprises the following steps.

Step 301, the ubiquitous network gateway converts the identifier of the device of the extension network of the ubiquitous network and transmits it to the ubiquitous network service platform.

When the device of the extension network of the ubiquitous network accesses the ubiquitous network, including powering on, logging in or registering, it sends the request information to the ubiquitous network gateway, wherein the request information includes the identifier of the device of the extension network of the ubiquitous network, to notify the ubiquitous network gateway that a device of the extension network of the ubiquitous network is accessing the network. Then, the ubiquitous network gateway converts the identifier of the device of the extension network of the ubiquitous network and further performs service interaction with the ubiquitous network service platform.

The ubiquitous network gateway converts the identifier of the device of the extension network of the ubiquitous network, stores the corresponding relationship between the converted identifier of the communication network device and the identifier of the device of the extension network of the ubiquitous network, namely the mapping relationship, and sends the information of the device of the extension network of the ubiquitous network to the ubiquitous network service platform, wherein the information of the device of the extension network of the ubiquitous network includes the converted identifier of the communication network device and the corresponding identifier of the ubiquitous network gateway.

Similarly, when leaving the ubiquitous network, the device of the extension network of the ubiquitous network sends the information of leaving the ubiquitous network to the ubiquitous network gateway, wherein the information includes the identifier of the device of the extension network of the ubiquitous network. The ubiquitous network gateway receives the information of leaving the ubiquitous network, inquires the mapping relationship between the identifier of the communication network device and the identifier of the device of the extension network of the ubiquitous network stored locally, deletes the mapping relationship between the identifier of the communication network device and the identifier of the device of the extension network of the ubiquitous network corresponding to the identifier of the device of the extension network of the ubiquitous network, and sends the information that the device of the extension network of the ubiquitous network leaves the network to the ubiquitous network service platform, wherein the information of the ubiquitous network leaving the network includes the identifier of the communication network device.

The converting comprises: the ubiquitous network gateway combining the identifier of the ubiquitous network gateway with the identifier of the device of the extension network of the ubiquitous network, wherein the combination can be the mixing combination or the direct-connection combination; or combining the identifier of the ubiquitous network gateway and the identifier of the device of the extension network of the ubiquitous network into an identifier group; or reassigns a device identifier for the device of the extension network of the ubiquitous network and correlates it with the identifier of the ubiquitous network gateway.

Step 302, the ubiquitous network service platform receives the identifier of the communication network device transmitted by the ubiquitous network gateway and sends information to the identifier management unit.

The ubiquitous network service platform receives the information of the device of the extension network of the ubiquitous network sent by the ubiquitous network gateway and sends to the identifier management unit the information of adding the mapping relationship between the identifier of the communication network device and the identifier of the ubiquitous network gateway, namely the information of the mapping relationship of the identifiers, wherein the mapping relationship is the corresponding relationship between the identifier of the ubiquitous network gateway and the converted identifier of the communication network device. The identifier management unit adds and stores the received mapping relationship of the identifiers into the local information and according to the received information.

Alternatively, after receiving the information that the device of the extension network of the ubiquitous network leaves the network, sent by the ubiquitous network gateway, the ubiquitous network service platform sends the updating information to the identifier management unit, wherein the updating information includes the mapping relationship of the identifiers. The identifier management unit updates the local mapping relationship of the identifiers according to the received updating information, wherein the updating comprises deleting the locally stored mapping relationship of the identifiers corresponding to the received mapping relationship of the identifiers.

Step 303, the ubiquitous network service platform performs information interaction with the ubiquitous network gateway according to the identifier of the communication network device, and further performs information interaction with the device of the extension network of the ubiquitous network.

For performing service interaction with the device of the extension network of the ubiquitous network, the ubiquitous network service platform sends the inquiring information to the identifier management unit, wherein the inquiring information includes the identifier of the ubiquitous network gateway. The identifier management unit inquires its mapping relationship of the identifiers according to the identifier of the ubiquitous network gateway, and sends the obtained identifier of the communication network device and the corresponding device identifier information of the communication network device to the ubiquitous network service platform, wherein the device identifier information of the communication network device includes the identifier of the communication network device and the storage duration of the identifier of the communication network device. The ubiquitous network service platform confirms that the mapping relationship of the identifiers in the identifier management unit requires to be updated and updates it, wherein the process comprises: comparing the storage duration of the identifier of the communication network device and the duration preset in the ubiquitous network service platform. If it is determined that the storage duration of the identifier of the communication network device is greater, it indicates that the mapping relationship of the identifiers in the identifier management unit has not been updated for a long time and the stored mapping relationship of the identifiers may be incomplete. The duration preset in the ubiquitous network service platform can be set based on needs. The ubiquitous network service platform sends the information of requesting the identifier of the communication network device to the ubiquitous network gateway. The ubiquitous network gateway receives the information, converts all the identifiers of the connected devices of the extension network of the ubiquitous network and sends the converted identifiers of the communication network device to the ubiquitous network service platform. The ubiquitous network service platform sends the updating information to the identifier management unit, wherein the updating information includes the mapping relationship of the identifiers. The identifier management unit updates its mapping relationship according to the mapping relationship of the identifiers in the updating information, wherein the updating comprises comparing the received mapping relationship of the identifiers with the mapping relationship of the identifiers in the identifier management unit, and if the two are different, updating the mapping relationship of the identifiers in the identifier management unit, that is to say, deleting what is redundant, adding what it lacks and changing what is different in the mapping relationship of the identifiers in the identifier management unit; and if the two are the same, no updating is required.

The ubiquitous network service platform sends service information to the ubiquitous network gateway according to the identifier of the communication network device obtained from the identifier management unit, wherein the service information includes the identifier of the communication network device. The ubiquitous network gateway receives the service information, converts the identifier of the communication network device to the identifier of the device of the extension network of the ubiquitous network and performs service interaction with the device of the extension network of the ubiquitous network. Specifically, the converting process is as follows: inquiring the locally stored mapping relationship between the identifier of the communication network device and the identifier of the device of the extension network of the ubiquitous network according to the received identifier of the communication network device, and determining the identifier of the device of the extension network of the ubiquitous network corresponding to the identifier of the communication network device.

Furthermore, the ubiquitous network gateway can further send the identifier of the device of the extension network of the ubiquitous network to the ubiquitous network service platform, and the ubiquitous network service platform sends the identifier of the device of the extension network of the ubiquitous network to the identifier management unit. Thus the mapping relationship of the identifiers maintained or stored in the identifier management unit further includes the mapping relationships among the identifier of the device of the extension network of the ubiquitous network, the identifier of the ubiquitous network gateway and the identifier of the communication network device, or includes the mapping relationship between the identifier of the device of the extension network of the ubiquitous network and the identifier of the communication network device. In this case, the maintaining comprises: adding and deleting the mapping relationship of the identifiers. The ubiquitous network service platform can inquire the identifier of the communication network device according to the identifier of the device of the extension network of the ubiquitous network, and can perform operations to the mapping relationship of the identifiers, such as updating, inquiring, adding etc.

The functions of the ubiquitous network service platform in the method above and the method further supplemented can be realized through the ubiquitous network application. Thus, the user or the network management can acquire the identifier of the device of the extension network of the ubiquitous network or the identifier of the ubiquitous network gateway through the known device identifier of the communication network. The user or the network management can locate and perform necessary operations to the device of the extension network of the ubiquitous network directly according to the obtained identifier of the device of the extension network of the ubiquitous network or the obtained identifier of the ubiquitous network gateway. For example, it is possible that the temperature indication of the sensor in the device of the extension network of the ubiquitous network is manually checked or the ubiquitous network gateway is changed, etc.

In addition, the ubiquitous network in the embodiment of the present invention is equivalent to the Internet of Things and M2M network. Correspondingly, the ubiquitous network gateway is equivalent to the Internet of Things gateway, the M2M gateway or sensor gateway, etc. The ubiquitous network service platform is equivalent to the service platform of the Internet of Things or M2M, etc.

The above is just the preferred embodiments of the present invention, but not intended to limit the protection scope of the present invention which is solely defined by the appended claims.

## Claims

1. A ubiquitous network gateway (201), comprising:
a conversion unit (2011), configured to convert an identifier of a device of extension network of ubiquitous network (204) to an identifier of a communication network device, and convert the identifier of the communication network device to the identifier of the device of the extension network of the ubiquitous network (204); and
an identifier mapping unit (2012), configured to store a mapping relationship between the identifier of the device of the extension network of the ubiquitous network and the identifier of the communication network device;
the ubiquitous network gateway (201) being **characterized in that**
the conversion unit (2011) is further configured to combine the identifier of the ubiquitous network gateway (201) with the identifier of the device of the extension network of the ubiquitous network (204) into a converted identifier group;
and **in that** it further comprises:
a service transceiver unit (2013), configured to interact with a ubiquitous network service platform (202) according to the converted identifier of the communication network device, and receive updating information sent by the ubiquitous network service platform for updating the mapping relationship of the stored identifiers.

2. A system for managing device identifiers of a ubiquitous network, comprising:
a ubiquitous network gateway (201), configured to convert an identifier of a device of the extension network of the ubiquitous network (204) to an identifier of a communication network device, store a mapping relationship between the identifier of the device of the extension network of the ubiquitous network (204) and the identifier of the communication network device, and interact with a ubiquitous network service platform (202) based on the identifier of the communication network device; and
a ubiquitous network service platform (202), configured to interact with the ubiquitous network gateway according to the identifier of the communication network device;
the ubiquitous network gateway (201) being **characterized in that**:
it is further configured to combine the identifier of the ubiquitous network gateway (201) and the identifier of the device of the extension network of the ubiquitous network (204) into a converted identifier group; and **in that** it further comprises:
a service transceiver unit (2013), configured to interact with a ubiquitous network service platform (202) according to the converted identifier of the communication network device, and receive updating information sent by the ubiquitous network service platform for updating the mapping relationship of the stored identifiers.

3. The system according to Claim 2, **characterized by** further comprising:
an identifier management unit (203), configured to maintain or store the mapping relationship of the identifiers.

4. The system according to Claim 2, **characterized in that**
the ubiquitous network service platform (202) is configured to maintain or store the mapping relationship of the identifiers.

5. The system according to Claim 3, **characterized in that**
the identifier management unit (203) is configured to manage the mapping relationship of the identifiers, including one or more functions of: adding, updating and inquiring.

6. The system according to Claim 5, **characterized in that**
the ubiquitous network service platform (202) is configured to perform service interaction with the identifier management unit (203), including one or more functions of: adding, updating and inquiring; and
the identifier management unit (203) is configured to provide one or more functions of: adding, updating and inquiring.

7. The system according to Claim 6, **characterized in that**
the ubiquitous network service platform (202) is configured to send the updating information to the identifier management unit (203) after receiving the information that the device of the extension network of the ubiquitous network leaves the network sent by the ubiquitous network gateway, wherein the updating information includes the mapping relationship of the identifiers;
the identifier management unit ( 203 ) is configured to update the local mapping relationship of the identifiers according to the received updating information, wherein the updating comprises deleting the locally stored mapping relationship of the identifiers corresponding to the received mapping relationship of the identifiers.

8. The system according to Claim 6, **characterized in that**
the ubiquitous network service platform(202) is configured to send inquiring information to the identifier management unit (202), wherein the inquiring information includes the identifier of the ubiquitous network gateway (201) or the identifier of the device of the extension network of the ubiquitous network (204) ; the identifier management unit (203) is configured to receive the inquiring information, search the mapping relationship of the identifiers according to the identifier of the ubiquitous network gateway (201) or the identifier of the device of the extension network of the ubiquitous network (204) in the inquiring information, and transmit obtained identifier information of the communication network device to the ubiquitous network service platform (202) ; and/or the identifier management unit (203) is configured to receive the inquiring information sent by a network management, wherein the inquiring information includes the identifier of the communication network device, search the mapping relationship of the identifiers, and send an obtained identifier of the device of the extension network of the ubiquitous network (204) or the obtained identifier of the ubiquitous network gateway (201) to the network management;
or,
the ubiquitous network service platform(202) is configured to send to the identifier management unit (203) information of adding mapping relationship of the identifiers; and the identifier management unit (203) is configured to receive the information of adding mapping relationship of the identifiers and add the mapping relationship of the identifiers in the information into local information.

9. A method for a ubiquitous network gateway for managing device identifiers of a ubiquitous network, comprising:
converting an identifier of a device of the extension network of the ubiquitous network (204) to an identifier of a communication network device;
interacting with a ubiquitous network service platform (202) according to the identifier of the communication network device;
storing a mapping relationship between the identifier of the device of the extension network of the ubiquitous network (204) and the identifier of the communication network device;
the method **characterized in that**
converting the identifier of the device of the extension network of the ubiquitous network (204) to the identifier of the communication network device further comprises:
combining the identifier of the ubiquitous network gateway (201) with the identifier of the device of the extension network of the ubiquitous network (204) into a converted identifier group;
interacting with an ubiquitous network service platform according to the converted identifier of the communication network device, and
receiving updating information sent by the ubiquitous network service platform for updating the mapping relationship of the stored identifiers.

10. The method according to Claim 9, **characterized by** further comprising:
the ubiquitous network service platform (202) performing service interaction with an identifier management unit (203), including adding, updating and inquiring the mapping relationship of the identifiers.

11. The method according to Claim 10, **characterized in that** the ubiquitous network service platform (202) or the identifier management unit (203) is configured to store the mapping relationship of the identifiers;
or,
the inquiring comprises: the ubiquitous network service platform (202) sending inquiring information to the identifier management unit (203) to inquire the identifier of the communication network device, wherein the inquiring information includes the identifier of the ubiquitous network gateway (201) or the identifier of the device of the extension network of the ubiquitous network(204), and the identifier management unit (203) receiving the inquiring information and transmitting the identifier of the communication network device to the ubiquitous network service platform (202) according to the mapping relationship of the identifiers; and/or, a network management sending the inquiring information to the identifier management unit (203), wherein the inquiring information includes the identifier of the device of the extension network of the ubiquitous network (204) or the identifier of the ubiquitous network gateway (201) , and the identifier management unit (203) receiving the inquiring information and transmitting the identifier of the device of the extension network of the ubiquitous network(204) or the identifier of the ubiquitous network gateway (201) to the network management according to the mapping relationship of the identifiers; the updating comprises: the ubiquitous network service platform (202) sending updating information including the mapping relationship of the identifiers to the identifier management unit (203), and the identifier management unit (203) receiving the updating information and updating the locally stored mapping relationship of the identifiers according to the mapping relationship of the identifiers in the updating information; and the adding comprises: the ubiquitous network service platform (202) sending to the identifier management unit (203) information of adding mapping relationship of the identifiers, and the identifier management unit (203) receiving the information and adding the mapping relationship of the identifiers in the information into the local information.

## Patentansprüche

1. Ubiquitäres Netzwerk-Gateway (201), umfassend:
eine Umwandlungseinheit (2011), die konfiguriert ist, um eine Kennung einer Vorrichtung eines Erweiterungsnetzwerks eines ubiquitären Netzwerks (204) in eine Kennung einer Kommunikationsnetzwerkvorrichtung umzuwandeln, und die Kennung der Kommunikationsnetzwerkvorrichtung in die Kennung der Vorrichtung des Erweiterungsnetzwerks des ubiquitären Netzwerks (204) umzuwandeln; und
eine Kennungs-Mapping-Einheit (2012), die konfiguriert ist, um ein Mapping-Verhältnis zwischen der Kennung der Vorrichtung des Erweiterungsnetzwerks des ubiquitären Netzwerks und der Kennung der Kommunikationsnetzwerkvorrichtung zu speichern;
wobei das ubiquitäre Netzwerk-Gateway (201) **dadurch gekennzeichnet ist, dass**
die Umwandlungseinheit (2011) ferner konfiguriert ist, um die Kennung des ubiquitären Netzwerk-Gateways (201) mit der Kennung der Vorrichtung des Erweiterungsnetzwerks des ubiquitären Netzwerks (204) zu einer umgewandelten Kennungsgruppe zu kombinieren;
und dadurch, dass es ferner Folgendes umfasst:
eine Dienst-Sendeempfängereinheit (2013), die konfiguriert ist, um mit einer ubiquitären Netzwerk-Dienstplattform (202) gemäß der umgewandelten Kennung der Kommunikationsnetzwerkvorrichtung zu interagieren, und Aktualisierungsinformationen zu empfangen, die von der ubiquitären Netzwerk-Dienstplattform gesendet werden, um das Mapping-Verhältnis der gespeicherten Kennungen zu aktualisieren.

2. System zum Verwalten von Vorrichtungskennungen eines ubiquitären Netzwerks, umfassend:
ein ubiquitäres Netzwerk-Gateway (201), das konfiguriert ist, um eine Kennung einer Vorrichtung des Erweiterungsnetzwerks des ubiquitären Netzwerks (204) in eine Kennung einer Kommunikationsnetzwerkvorrichtung umzuwandeln, ein Mapping-Verhältnis zwischen der Kennung der Vorrichtung des Erweiterungsnetzwerks des ubiquitären Netzwerks (204) und der Kennung der Kommunikationsnetzwerkvorrichtung zu speichern und mit einer ubiquitären Netzwerk-Dienstplattform (202) basierend auf der Kennung der Kommunikationsnetzwerkvorrichtung zu interagieren; und
eine ubiquitäre Netzwerk-Dienstplattform (202), die konfiguriert ist, um gemäß der Kennung der Kommunikationsnetzwerkvorrichtung mit dem ubiquitären Netzwerk-Gateway zu interagieren;
das ubiquitäre Netzwerk-Gateway (201) **dadurch gekennzeichnet ist, dass**: es ferner konfiguriert ist, um die Kennung des ubiquitären Netzwerk-Gateways (201) und die Kennung der Vorrichtung des Erweiterungsnetzwerks des ubiquitären Netzwerks (204) in eine umgewandelte Kennungsgruppe zu kombinieren; und
dadurch, dass es ferner Folgendes umfasst:
eine Dienst-Sendeempfängereinheit (2013), die konfiguriert ist, um mit einer ubiquitären Netzwerk-Dienstplattform (202) gemäß der umgewandelten Kennung der Kommunikationsnetzwerkvorrichtung zu interagieren, und Aktualisierungsinformationen zu empfangen, die von der ubiquitären Netzwerk-Dienstplattform gesendet werden, um das Mapping-Verhältnis der gespeicherten Kennungen zu aktualisieren.

3. System nach Anspruch 2, **dadurch gekennzeichnet, dass** es ferner Folgendes umfasst:
eine Kennungs-Verwaltungseinheit (203), die konfiguriert ist, um das Mapping-Verhältnis der Kennungen aufrechtzuerhalten oder zu speichern.

4. System nach Anspruch 2, **dadurch gekennzeichnet, dass**
die ubiquitäre Netzwerk-Dienstplattform (202) konfiguriert ist, um das Mapping-Verhältnis der Kennungen aufrechtzuerhalten oder zu speichern.

5. System nach Anspruch 3, **dadurch gekennzeichnet, dass**
die Kennungs-Verwaltungseinheit (203) konfiguriert ist, um das Mapping-Verhältnis der Kennungen zu verwalten, einschließlich einer oder mehrerer Funktionen eines: Hinzufügens, Aktualisierens und Abfragens.

6. System nach Anspruch 5, **dadurch gekennzeichnet, dass**
die ubiquitäre Netzwerk-Dienstplattform (202) konfiguriert ist, um eine Dienstinteraktion mit der Kennungs-Verwaltungseinheit (203) auszuführen, einschließlich einer oder mehrerer Funktionen eines: Hinzufügens, Aktualisierens und Abfragens; und
die Kennungs-Verwaltungseinheit (203) konfiguriert ist, um eine oder mehrere Funktionen eines: Hinzufügens, Aktualisierens und Abfragens bereitzustellen.

7. System nach Anspruch 6, **dadurch gekennzeichnet, dass**
die ubiquitäre Netzwerk-Dienstplattform (202) konfiguriert ist, um die Aktualisierungsinformationen an die Kennungs-Verwaltungseinheit (203) zu senden, nachdem sie die Informationen empfangen hat, dass die Vorrichtung des Erweiterungsnetzwerks des ubiquitären Netzwerks das Netzwerk verlässt, die von dem ubiquitären Netzwerk-Gateway gesendet wurden, wobei die Aktualisierungsinformationen die Mapping-Verhältnis der Kennungen beinhalten;
die Kennungs-Verwaltungseinheit (203) konfiguriert ist, um das lokale Mapping-Verhältnis der Kennungen gemäß der empfangenen Aktualisierungsinformation zu aktualisieren, wobei das Aktualisieren ein Löschen des lokal gespeicherten Mapping-Verhältnisses der Kennungen entsprechend dem empfangenen Mapping-Verhältnis der Kennungen umfasst.

8. System nach Anspruch 6, **dadurch gekennzeichnet, dass**
die ubiquitäre Netzwerk-Dienstplattform (202) konfiguriert ist, um Abfrageinformationen an die Kennungs-Verwaltungseinheit (202) zu senden, wobei die Abfrageinformationen die Kennung des ubiquitären Netzwerk-Gateways (201) oder die Kennung der Vorrichtung des Erweiterungsnetzwerks des ubiquitären Netzwerks (204) beinhalten; die Kennungs-Verwaltungseinheit (203) konfiguriert ist, um die Abfragedaten zu empfangen, das Mapping-Verhältniks der Kennungen gemäß der Kennung des ubiquitären Netzwerk-Gateways (201) oder der Kennung der Vorrichtung des Erweiterungsnetzwerks des ubiquitären Netzwerks (204) in den Abfragedaten zu suchen und die erlangten Kennungsinformationen der Kommunikationsnetzwerkvorrichtung an die ubiquitäre Netzwerk-Dienstplattform (202) zu übertragen; und/oder die Kennungs-Verwaltungseinheit (203) konfiguriert ist, um die von einer Netzwerkverwaltung gesendeten Abfrageinformationen zu empfangen, wobei die Abfrageinformationen die Kennung der Kommunikationsnetzwerkvorrichtung beinhalten, das Mapping-Verhältnis der Kennungen zu suchen und eine erhaltene Kennung der Vorrichtung des Erweiterungsnetzwerks des ubiquitären Netzwerks (204) oder die erlangte Kennung des ubiquitären Netzwerk-Gateways (201) an die Netzwerkverwaltung zu senden;
oder
die ubiquitäre Netzwerk-Dienstplattform (202) konfiguriert ist, um an die Kennungs-Verwaltungseinheit (203) Informationen über ein Hinzufügen eines Mapping-Verhältnisses der Kennungen zu senden; und die Kennungs-Verwaltungseinheit (203) konfiguriert ist, um die Informationen über ein Hinzufügen des Mapping-Verhältnisses der Kennungen zu empfangen und das Mapping-Verhältnis der Kennungen in den Informationen zu lokalen Informationen hinzuzufügen.

9. Verfahren für ein ubiquitäres Netzwerk-Gateway zum Verwalten von Vorrichtungskennungen eines ubiquitären Netzwerks, umfassend:
Umwandeln einer Kennung einer Vorrichtung des Erweiterungsnetzwerks des ubiquitären Netzwerks (204) in eine Kennung einer Kommunikationsnetzwerkvorrichtung;
Interagieren mit einer ubiquitären Netzwerk-Dienstplattform (202) entsprechend der Kennung der Kommunikationsnetzwerkvorrichtung;
Speichern eines Mapping-Verhältnisses zwischen der Kennung der Vorrichtung des Erweiterungsnetzwerks des ubiquitären Netzwerks (204) und der Kennung der Kommunikationsnetzwerkvorrichtung;
wobei das Verfahren **dadurch gekennzeichnet, dass**
ein Umwandeln der Kennung der Vorrichtung des Erweiterungsnetzwerks des ubiquitären Netzwerks (204) in die Kennung der Kommunikationsnetzwerkvorrichtung ferner Folgendes umfasst:
Kombinieren der Kennung des Gateways des ubiquitären Netzwerks (201) mit der Kennung der Vorrichtung des Erweiterungsnetzwerks des ubiquitären Netzwerks (204) zu einer umgewandelten Kennungsgruppe;
Interagieren mit einer ubiquitären Netzwerk-Dienstplattform entsprechend der umgewandelten Kennung der Kommunikationsnetzwerkvorrichtung, und
Empfangen von Aktualisierungsinformationen, die von der ubiquitären Netzwerk-Dienstplattform gesendet werden, um das Mapping-Verhältnis der gespeicherten Kennungen zu aktualisieren.

10. Verfahren nach Anspruch 9, **dadurch gekennzeichnet, dass** es ferner Folgendes umfasst:
die ubiquitäre Netzwerk-Dienstplattform (202) führt eine Dienstinteraktion mit einer Kennungs-Verwaltungseinheit (203) aus, einschließlich eines Hinzufügens, Aktualisierens und Abfragens des Mapping-Verhältnisses der Kennungen.

11. Verfahren nach Anspruch 10, **dadurch gekennzeichnet, dass** die ubiquitäre Netzwerk-Dienstplattform (202) oder die Kennungs-Verwaltungseinheit (203) konfiguriert ist, um das Mapping-Verhältnis der Kennungen zu speichern;
oder
die Abfrage Folgendes umfasst: die ubiquitäre Netzwerk-Dienstplattform (202), die Abfrageinformationen an die Kennungs-Verwaltungseinheit (203) sendet, um die Kennung der Kommunikationsnetzwerkvorrichtung abzufragen, wobei die Abfrageinformationen die Kennung des ubiquitären Netzwerk-Gateways (201) oder die Kennung der Vorrichtung des Erweiterungsnetzwerks des ubiquitären Netzwerks (204) enthalten und die Kennungs-Verwaltungseinheit (203) die Abfrageinformationen empfängt und die Kennung der Kommunikationsnetz-Vorrichtung an die ubiquitäre Netzwerk-Dienstplattform (202) gemäß der Mapping-Verhältnis der Kennungen überträgt; und/oder, eine Netzwerkverwaltung, die die Abfragedaten an die Kennungs-Verwaltungseinheit (203) sendet, wobei die Abfragedaten die Kennung der Vorrichtung des Erweiterungsnetzwerks des ubiquitären Netzwerks (204) oder die Kennung des ubiquitären Netzwerk-Gateways (201) beinhalten, und die Kennungs-Verwaltungseinheit (203) die Abfragedaten empfängt und die Kennung der Vorrichtung des Erweiterungsnetzwerks des ubiquitären Netzwerks (204) oder die Kennung des ubiquitären Netzwerk-Gateways (201) gemäß dem Mapping-Verhältnis der Kennungen an die Netzwerkverwaltung überträgt; die Aktualisierung Folgendes umfasst: die ubiquitäre Netzwerk-Dienstplattform (202) sendet Aktualisierungsinformationen einschließlich des Mapping-Verhältnisses der Kennungen an die Kennungs-Verwaltungseinheit (203), und die Kennungs-Verwaltungseinheit (203) empfängt die Aktualisierungsinformationen und aktualisiert das lokal gespeicherte Mapping-Verhältnis der Kennungen gemäß dem Mapping-Verhältnis der Kennungen in den Aktualisierungsinformationen; und das Hinzufügen Folgendes umfasst: die ubiquitäre Netzwerk-Dienstplattform (202) sendet an die Kennungs-Verwaltungseinheit (203) Informationen über das Hinzufügen eines Mapping-Verhältnisses der Kennungen, und die Kennungs-Verwaltungseinheit (203) empfängt die Informationen und fügt das Mapping-Verhältnis der Kennungen in den Informationen zu den lokalen Informationen hinzu.

## Revendications

1. Passerelle de réseau omniprésent (201), comprenant :
une unité de conversion (2011), configurée pour convertir un identifiant d'un dispositif de réseau d'extension de réseau omniprésent (204) en un identifiant d'un dispositif de réseau de communication, et pour convertir l'identifiant du dispositif de réseau de communication en l'identifiant du dispositif du réseau d'extension du réseau omniprésent (204) ; et
une unité de mise en correspondance d'identifiants (2012), configurée pour stocker une relation de mise en correspondance entre l'identifiant du dispositif du réseau d'extension du réseau omniprésent et l'identifiant du dispositif de réseau de communication ;
la passerelle de réseau omniprésent (201) étant **caractérisée en ce que**
l'unité de conversion (2011) est en outre configurée pour combiner, dans un groupe d'identifiants convertis, l'identifiant de la passerelle de réseau omniprésent (201) avec l'identifiant du dispositif du réseau d'extension du réseau omniprésent (204) ;
et **en ce qu'**elle comprend en outre :
une unité émettrice-réceptrice de services (2013), configurée pour interagir avec une plate-forme de services de réseau omniprésent (202) en fonction de l'identifiant converti du dispositif de réseau de communication, et pour recevoir des informations de mise à jour envoyées par la plate-forme de services de réseau omniprésent pour mettre à jour la relation de mise en correspondance des identifiants stockés.

2. Système de gestion d'identifiants de dispositif d'un réseau omniprésent, comprenant :
une passerelle de réseau omniprésent (201), configurée pour convertir un identifiant d'un dispositif du réseau d'extension du réseau omniprésent (204) en un identifiant d'un dispositif de réseau de communication, pour stocker une relation de mise en correspondance entre l'identifiant du dispositif du réseau d'extension du réseau omniprésent (204) et l'identifiant du dispositif de réseau de communication, et pour interagir avec une plate-forme de services de réseau omniprésent (202) sur la base de l'identifiant du dispositif de réseau de communication ; et
une plate-forme de services de réseau omniprésent (202), configurée pour interagir avec la passerelle de réseau omniprésent conformément à l'identifiant du dispositif de réseau de communication ;
la passerelle de réseau omniprésent (201) étant **caractérisée en ce que** : elle est en outre configurée pour combiner, dans un groupe d'identifiants convertis, l'identifiant de la passerelle de réseau omniprésent (201) et l'identifiant du dispositif du réseau d'extension du réseau omniprésent (204) ; et
**en ce qu'**elle comprend en outre :
une unité émettrice-réceptrice de services (2013), configurée pour interagir avec une plate-forme de services de réseau omniprésent (202) en fonction de l'identifiant converti du dispositif de réseau de communication, et pour recevoir des informations de mise à jour envoyées par la plate-forme de services de réseau omniprésent pour mettre à jour la relation de mise en correspondance des identifiants stockés.

3. Système selon la revendication 2, **caractérisé en ce qu'**il comprend en outre :
une unité de gestion d'identifiants (203), configurée pour conserver ou stocker la relation de mise en correspondance des identifiants.

4. Système selon la revendication 2, **caractérisé en ce que**
la plate-forme de services de réseau omniprésent (202) est configurée pour conserver ou stocker la relation de mise en correspondance des identifiants.

5. Système selon la revendication 3, **caractérisé en ce que**
l'unité de gestion d'identifiants (203) est configurée pour gérer la relation de mise en correspondance des identifiants, y compris une ou plusieurs fonctions parmi : l'ajout, la mise à jour et l'interrogation.

6. Système selon la revendication 5, **caractérisé en ce que**
la plate-forme de services de réseau omniprésent (202) est configurée pour effectuer une interaction de services avec l'unité de gestion d'identifiants (203), y compris une ou plusieurs fonctions parmi : l'ajout, la mise à jour et l'interrogation ; et
l'unité de gestion d'identifiants (203) est configurée pour fournir une ou plusieurs fonctions parmi : l'ajout, la mise à jour et l'interrogation.

7. Système selon la revendication 6, **caractérisé en ce que**
la plate-forme de services de réseau omniprésent (202) est configurée pour envoyer les informations de mise à jour à l'unité de gestion d'identifiants (203) après avoir reçu les informations, selon lesquelles le dispositif du réseau d'extension du réseau omniprésent quitte le réseau, envoyées par la passerelle de réseau omniprésent, dans lequel les informations de mise à jour comprennent la relation de mise en correspondance des identifiants ;
l'unité de gestion d'identifiants (203) est configurée pour mettre à jour la relation de mise en correspondance locale des identifiants conformément aux informations de mise à jour reçues, dans lequel la mise à jour comprend la suppression de la relation de mise en correspondance stockée localement des identifiants correspondant à la relation de mise en correspondance reçue des identifiants.

8. Système selon la revendication 6, **caractérisé en ce que**
la plate-forme de services de réseau omniprésent (202) est configurée pour envoyer des informations d'interrogation à l'unité de gestion d'identifiants (202), dans lequel les informations d'interrogation comprennent l'identifiant de la passerelle de réseau omniprésent (201) ou l'identifiant du dispositif du réseau d'extension du réseau omniprésent (204) ; l'unité de gestion d'identifiants (203) est configurée pour recevoir les informations d'interrogation, pour rechercher la relation de mise en correspondance des identifiants en fonction de l'identifiant de la passerelle de réseau omniprésent (201) ou de l'identifiant du dispositif du réseau d'extension du réseau omniprésent (204) dans les informations d'interrogation, et pour transmettre les informations d'identifiant obtenues du dispositif de réseau de communication à la plate-forme de services de réseau omniprésent (202) ; et/ou l'unité de gestion d'identifiants (203) est configurée pour recevoir les informations d'interrogation envoyées par une administration de réseau, dans lequel les informations d'interrogation comprennent l'identifiant du dispositif de réseau de communication, pour rechercher la relation de mise en correspondance des identifiants, et pour envoyer à l'administration de réseau un identifiant obtenu du dispositif du réseau d'extension du réseau omniprésent (204) ou l'identifiant obtenu de la passerelle de réseau omniprésent (201) ;
ou,
la plate-forme de services de réseau omniprésent (202) est configurée pour envoyer à l'unité de gestion d'identifiants (203) des informations d'ajout de relation de mise en correspondance des identifiants ; et l'unité de gestion d'identifiants (203) est configurée pour recevoir les informations d'ajout de relation de mise en correspondance des identifiants et pour ajouter, dans les informations locales, la relation de mise en correspondance des identifiants dans les informations.

9. Procédé pour une passerelle de réseau omniprésent permettant de gérer des identifiants de dispositif d'un réseau omniprésent, comprenant :
la conversion d'un identifiant d'un dispositif du réseau d'extension du réseau omniprésent (204) en un identifiant d'un dispositif de réseau de communication ;
l'interaction avec une plate-forme de services de réseau omniprésent (202) conformément à l'identifiant du dispositif de réseau de communication ;
le stockage d'une relation de mise en correspondance entre l'identifiant du dispositif du réseau d'extension du réseau omniprésent (204) et l'identifiant du dispositif de réseau de communication ;
le procédé étant **caractérisé en ce que**
la conversion de l'identifiant du dispositif du réseau d'extension du réseau omniprésent (204) en l'identifiant du dispositif de réseau de communication comprend en outre :
la combinaison, dans un groupe d'identifiants convertis, de l'identifiant de la passerelle de réseau omniprésent (201) avec l'identifiant du dispositif du réseau d'extension du réseau omniprésent (204) ;
l'interaction avec une plate-forme de services de réseau omniprésent en fonction de l'identifiant converti du dispositif de réseau de communication, et
la réception des informations de mise à jour envoyées par la plate-forme de services de réseau omniprésent pour mettre à jour la relation de mise en correspondance des identifiants stockés.

10. Procédé selon la revendication 9, **caractérisé en ce qu'**il comprend en outre :
la plate-forme de services de réseau omniprésent (202) effectuant une interaction de services avec une unité de gestion d'identifiants (203), comprenant l'ajout, la mise à jour et l'interrogation de la relation de mise en correspondance des identifiants.

11. Procédé selon la revendication 10, **caractérisé en ce que** la plate-forme de services de réseau omniprésent (202) ou l'unité de gestion d'identifiants (203) est configurée pour stocker la relation de mise en correspondance des identifiants ;
ou,
l'interrogation comprend : l'envoi, par la plate-forme de services de réseau omniprésent (202), d'informations d'interrogation à l'unité de gestion d'identifiants (203) pour interroger l'identifiant du dispositif de réseau de communication, dans lequel les informations d'interrogation comprennent l'identifiant de la passerelle de réseau omniprésent (201) ou l'identifiant du dispositif du réseau d'extension du réseau omniprésent (204), et la réception, par l'unité de gestion d'identifiants (203), des informations d'interrogation et la transmission de l'identifiant du dispositif de réseau de communication à la plate-forme de services de réseau omniprésent (202) conformément à la relation de mise en correspondance des identifiants ; et/ou, l'envoi, par une administration de réseau, des informations d'interrogation à l'unité de gestion d'identifiants (203), dans lequel les informations d'interrogation comprennent l'identifiant du dispositif du réseau d'extension du réseau omniprésent (204) ou l'identifiant de la passerelle de réseau omniprésent (201), et la réception, par l'unité de gestion d'identifiants (203), des informations d'interrogation et la transmission de l'identifiant du dispositif du réseau d'extension du réseau omniprésent (204) ou de l'identifiant de la passerelle de réseau omniprésent (201) à l'administration de réseau conformément à la relation de mise en correspondance des identifiants ; la mise à jour comprend : l'envoi, par la plate-forme de services de réseau omniprésent (202), d'informations de mise à jour, comprenant la relation de mise en correspondance des identifiants, à l'unité de gestion d'identifiants (203), et la réception, par l'unité de gestion d'identifiants (203), des informations de mise à jour et la mise à jour de la relation de mise en correspondance stockée localement des identifiants conformément à la relation de mise en correspondance des identifiants dans les informations de mise à jour ; et l'ajout comprend : l'envoi, par la plate-forme de services de réseau omniprésent (202) à l'unité de gestion d'identifiants (203), d'informations d'ajout de relation de mise en correspondance des identifiants, et la réception, par l'unité de gestion d'identifiants (203), des informations et l'ajout, dans les informations locales, de la relation de mise en correspondance des identifiants dans les informations.
